# EUROPEAN PATENT APPLICATION

(11) **EP 4 841 372 A1**
(43) Date of publication of application: **18.11.2026**
(21) Application number: 26175387.5
(22) Date of filing: 29.04.2026
(51) Int. Cl.: G05B 19/042, H04L 25/02

(54) **IO-LINK SAFETY DEVICE**

(30) Priority: 13.05.2025 IT 202500010758
(71) Applicant: Pizzato Elettrica S.r.l., 36063 Marostica (Vicenza) (IT)
(72) Inventor: SERAFIN, Diego, 36063 MAROSTICA (VI) (IT)
(74) Representative: Studio Torta S.p.A.

(57) **Abstract**

An IO-Link safety device (10) configured to receive a request from a master device (11) and comprising: a sensor (12) or actuator configured to transmit measurement signals, a first microcontroller (13) and a second microcontroller (14) connected to the sensor (12) and configured to receive the measurement signals and to generate safety data based on the measurement signals, a transceiver (17) configured to receive the request from the master device (11), a third microcontroller (19) connected to the transceiver (17) to receive the request and to execute an IO-Link or IO-Link Safety protocol stack; the third microcontroller (19) is in unidirectional communication with the first microcontroller (13) for transmitting the request and is in unidirectional communication with the second microcontroller (14) for receiving the safety data in response to the request.

## Description

### CROSS-REFERENCE TO RELATED APPLICATIONS

This patent application claims priority from Italian patent application no. 102025000010758 filed on May 13, 2025, the entire disclosure of which is incorporated herein by reference.

### TECHNICAL FIELD

The present invention relates, for example but without limitation, to a safety device provided with an IO-Link connection for industrial machines or systems, configured to be connected to an industrial communication network.

### STATE OF THE ART

IO-Link devices are known, which comprise a sensor connected to a first microcontroller, which in turn is connected bidirectionally to a second microcontroller. The first microcontroller is typically used to communicate with the sensor in order to collect data from it and to transmit the collected data to the second microcontroller, which is instead used to execute an IO-Link stack and to transmit the collected data to a master device via the IO-Link communication protocol. An example of such a device is described in document EP3732793 B1.

A drawback of such devices is that they cannot be used in safety applications, as their structure, comprising a single microcontroller connected to the sensor, does not allow to meet the reliability and safety standards typically required by regulations, such as UNI EN ISO 14119, which govern the realization of safety devices for industrial machinery or plants.

In fact, in the known devices under discussion, the sensor is connected only to a microcontroller lacking additional control systems and redundancy. In such cases, a malfunction or failure of the microcontroller or sensor may not be detected by the device itself, the master device, or other devices in the industrial communication network. This could lead to the machine or industrial plant being permitted to operate in a hazardous manner, even in situations that are dangerous for the operator but remain undetected due to the malfunction or failure.

As a matter of fact, a safety device built using the well-known architecture under discussion would not be able to meet the PLe or SIL 3 safety standards now required by the industrial sector and met, for example, by the IO-Link Safety communication protocol.

The aim of the present invention is therefore to provide an IO-Link safety device capable of meeting the safety standards required in the industrial automation sector for safety devices.

A further aim of the present invention is to provide an IO-Link safety device that is versatile, cost-effective and simple to manufacture.

### SUMMARY OF THE INVENTION

According to the aforementioned aims, the present invention provides an IO-Link safety device as defined in claim 1 and, preferably but not necessarily, in any of the claims dependent thereon.

The claims describe preferred embodiments of the present invention and form an integral part of this description.

### BRIEF DESCRIPTION OF THE DRAWINGS

In the following, certain embodiments of the invention will be described for a better understanding thereof by way of non-limiting examples and with reference to the accompanying figures, in which:
- Figures 1 and 2 are schematic diagrams of an IO-Link safety device according to respective embodiments of the present invention;
- Figure 3 is a schematic diagram of an industrial communication network comprising an IO-Link safety device according to the present invention.

### EMBODIMENTS OF THE INVENTION

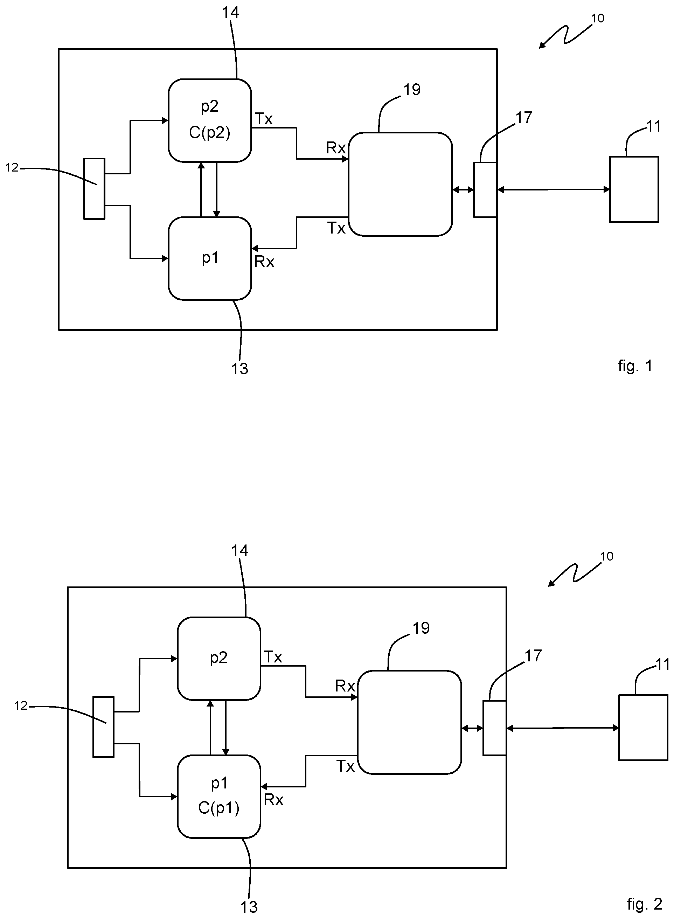

With reference to the example illustrated in Figure 1, the number 10 denotes an IO-Link safety device, hereinafter referred to simply as safety device 10, according to an embodiment of the present invention. The safety device 10 is configured to activate a safety function of a machine or industrial plant. For example, the safety device 10 may be a safety switch 10a for a movable guard, with or without locking, a light curtain 10b, a push-button panel 10c provided with an emergency stop button, or any other safety device.

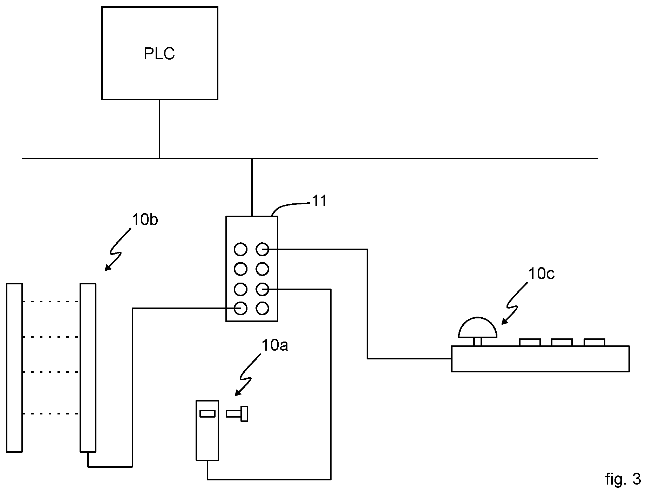

The safety device 10 is configured to be integrated into an industrial communication network and to operate as a "slave" device communicating with a "master" device 11 (Fig. 3) via a point-to-point IO-Link connection, preferably IO-Link Safety. It should be noted that in this description, the term 'IO-Link' also refers to the IO-Link Safety protocol.

Referring to the example in Figure 3, the master device 11 is in turn connected to the industrial communication network, comprising, for example, a PLC, via an industrial communication bus such as, for example, ProfiNet, ProfiSafe or others.

With reference to Figures 1 or 2, the safety device 10 comprises at least one sensor or actuator, hereinafter referred to simply as sensor 12, a first microcontroller 13 and a second microcontroller 14. The first microcontroller 13 and the second microcontroller 14 are both operatively connected to the sensor 12 to receive measurement signals from it and/or to control its operation. In particular, the first microcontroller 13 and the second microcontroller 14 are configured to receive, independently of one another, the same measurement signals from the sensor 12. Furthermore, the first microcontroller 13 and the second microcontroller 14 are configured to transmit control signals to the sensor or actuator 12.

The safety device 10 further comprises a transceiver 17 configured to receive/transmit communication data from/to the master device 11 and a third microcontroller 19 operatively connected to the transceiver 17 and communicating with it bidirectionally.

In some embodiments not shown, the third microcontroller 19 may comprise the transceiver 17.

In particular, the transceiver 17 is configured to receive communication data from the master device 11 and transmit the same to the third microcontroller 19. By way of example, the communication data transmitted by the master device 11 and received by the transceiver 17 comprise a request, for example a cyclic request for data relating to the measurement signals generated by the sensor 12.

In the embodiments of Figures 1 or 2, the transceiver 17 is connected to the third microcontroller 19 via a UART or USART interface. It should be noted that the interface between the transceiver 17 and the third microcontroller 19 may also differ from the UART or USART interface without thereby departing from the scope of the present invention.

The third microcontroller 19 is configured to receive communication data from the transceiver 17 and to execute an IO-Link or IO-Link Safety protocol stack, in order to decode the request contained in said communication data and manage the IO-Link or IO-Link Safety communication with the master device 11. Furthermore, the third microcontroller 19 is configured to transmit further communication data to the transceiver 17.

According to one aspect of the present invention, the third microcontroller 19 is connected to the first microcontroller 13 via a unidirectional communication link to transmit data associated with the request originating from the master device 11 .

In the embodiments of Figures 1 or 2, the third microcontroller 19 is connected to the first microcontroller 13 via a UART or USART interface, for example by using only the transmission channel of the interface. It should be noted that the interface between the third microcontroller 19 and the first microcontroller 13 may also differ from the UART or USART interface without thereby departing from the scope of the present invention.

Furthermore, the third microcontroller 19 is connected in a unidirectional communication link with the second microcontroller 14 for the reception of safety data generated on the basis of the measurement signals from the sensor 12, in response to a request from the master device 11.

The third microcontroller 19 may be connected to the second microcontroller 14 via a UART or USART interface, for example by using only the interface's receive channel. It should be noted that the interface between the third microcontroller 19 and the second microcontroller 14 may also differ from the UART or USART interface without thereby departing from the scope of the present invention.

Furthermore, the first microcontroller 13 and the second microcontroller 14 are interconnected. In particular, the first microcontroller 13 is configured to receive data associated with the request from the master device 11, originating from the third microcontroller 19, and to decode such data and transmit to the second microcontroller 14 further data associated with the request from the master device 11. For example, the first microcontroller 13 transmits to the second microcontroller 14 a copy of the data associated with the request from the master device 11 that it has received from the third microcontroller 19.

In addition, the first microcontroller 13 and the second microcontroller 14 are configured to generate safety data based on the measurement signals from the sensor 12.

In particular, one of the first microcontroller 13 and the second microcontroller 14 is configured to generate a payload p1, p2 encoding the measurement signals, and the other of the first microcontroller 13 and the second microcontroller 14 is configured to generate control data C(p1), C(p2) based on the measurement signals from sensor 12. More specifically, the safety data comprises a payload p1, p2 encoding the measurement signals generated by one microprocessor 13, 14 and control data C(p1), C(p2) generated by the other microprocessor 13, 14.

For example, with reference to Figure 1, the first microcontroller 13 is configured to generate a first payload p1 based on the measurement signals from sensor 12 in response to a request from the master device 11. By way of example, this payload digitally encodes at least part of the measurement signals from sensor 12.

Furthermore, in this embodiment, the second microcontroller 14 is configured to generate a second payload p2 based on the measurement signals from sensor 12 in response to a request from the master device 11, and to generate control data C(p2) based on the second payload p2. By way of example, the control data C(p2) may comprise a CRC calculated on the basis of the second payload p2.

Furthermore, the first microcontroller 13 is configured to transmit the first payload p1 to the second microcontroller 14, which is, in turn, configured to transmit the first payload p1 and the control data C(p2) to the third microcontroller 19.

The third microcontroller 19 is further configured to insert the first payload p1 and the control data C(p2) into a frame and to transmit the frame to the master device 11 according to the IO-Link communication protocol via the transceiver 17.

In this way, the master device 11 can advantageously compare whether the control data C(p2) is consistent with the first payload p1 to verify that the first microprocessor 13 and the second microprocessor 14 are operating correctly and to rule out malfunctions or faults.

Alternatively, with reference to Figure 2, the first microcontroller 13 is configured to generate a first payload p1 based on the measurement signals from the sensor 12 in response to the request from the master device 11, and to generate control data C(p1) based on the first payload p1. By way of example, the control data C(p1) may comprise a CRC calculated on the basis of the first payload p1.

In addition, in this embodiment, the second microcontroller 14 is configured to generate a second payload p2 based on the measurement signals from sensor 12 in response to the request from the master device 11. By way of example, this payload digitally encodes at least part of the measurement signals from sensor 12.

Furthermore, the first microcontroller 13 is configured to transmit the control data C(p1) to the second microcontroller 14, which is, in turn, configured to transmit the second payload p2 and the control data C(p1) to the third microcontroller 19.

The third microcontroller 19 is also configured to insert the second payload p2 and the control data C(p1) into a frame to be transmitted to the master device 11 according to the IO-Link communication protocol via the transceiver 17.

In this way, the master device 11 can advantageously compare whether the control data C(p1) is consistent with the second payload p2 to verify that the first microprocessor 13 and the second microprocessor 14 are operating correctly and to rule out malfunctions or faults.

Preferably, the payloads p1 and p2 generated respectively by the first microcontroller 13 and the second microcontroller 14 are generated from measurement signals of the sensor 12 received simultaneously and independently by the first microcontroller 13 and the second microcontroller 14.

An advantageous aspect of the IO-Link safety device 10 of the present invention lies in the fact that the first microcontroller 13 and the second microcontroller 14 are physically connected in a unidirectional communication link with the third microcontroller 19. In particular, the first microcontroller 13 and the second microcontroller 14 are physically connected in a unidirectional manner, for reception and transmission respectively, to the third microcontroller 19. This necessitates the involvement of both microcontrollers 13 and 14 in the generation of safety data and eliminates the risk that the same microcontroller receiving data from the third microcontroller 19 might also transmit a response to the latter without involving the other microcontroller. This increases the safety of the safety device 10 and eliminates the risk of incorrect programming that would use a single microprocessor for the generation of safety data.

## Claims

1. An IO-Link safety device (10) configured to receive communication data comprising a request from a master device (11), wherein said IO-Link safety device (10) comprises:
- a sensor or actuator (12) configured to transmit measurement signals;
- a first microcontroller (13) and a second microcontroller (14) connected to said sensor (12) and configured to receive said measurement signals and to generate safety data based on said measurement signals, and
- a transceiver (17) configured to receive communication data from said master device (11);
- a third microcontroller (19) connected in bidirectional communication with said transceiver (17) to receive said communication data and to execute an IO-Link or IO-Link Safety protocol stack,
said IO-Link safety device (10) being **characterized in that** said third microcontroller (19) is in unidirectional communication with said first microcontroller (13) for the transmission of data relating to said request and is in unidirectional communication with said second microcontroller (14) for the reception of safety data generated based on said measurement signals in response to said request.

2. Safety device (10) according to claim 1, **characterized in that** one of said first microcontroller (13) and said second microcontroller (14) is configured to generate a payload (p1, p2) encoding said measurement signals and the other of said first microcontroller (13) and said second microcontroller (14) is configured to generate control data (C(p1), C(p2)) based on said measurement signals.

3. Safety device (10) according to claim 2, **characterized in that** said safety data comprises said payload (p1, p2) and said control data (C(p1), C(p2)).

4. Safety device (10) according to claim 2 or 3, **characterized in that** said first microcontroller (13) is configured to generate a payload (p1) encoding said measurement signals and said second microcontroller (14) is configured to generate control data (C(p2)) based on said measurement signals.

5. Safety device (10) according to claims 2 or 3, **characterized in that** said second microcontroller (14) is configured to generate a payload (p2) encoding said measurement signals and said first microcontroller (13) is configured to generate control data (C(p1)) based on said measurement signals.

6. Safety device (10) according to claim 4, **characterized in that** said first microcontroller (13) is configured to transmit said payload (p1) to said second microcontroller (14) **and in that** said second microcontroller (14) is configured to generate a second payload (p2) based on said measurement signals and to generate said control data (C(p2)) based on said second payload (p2).

7. Safety device (10) according to claim 5, **characterized in that** said first microcontroller (13) is configured to generate said control data (C(p1)) based on said first payload (p1) and to transmit said control data (C(p1)) to said second microcontroller (14), and **in that** said second microcontroller (14) is configured to generate a second payload (p2) based on said measurement signals.

8. Safety device (10) according to claim 6, **characterized in that** said second microcontroller (14) is configured to transmit said second payload (p2), said first payload (p1) and said control data (C(p2)) to said third microcontroller (19).

9. Safety device (10) according to claim 7, **characterized in that** said second microcontroller (14) is configured to transmit said second payload (p2) and said control data (C(p1)) to said third microcontroller (19).

10. Safety device (10) according to any one of claims 2 to 9, **characterized in that** said payloads (p1, p2) and said control data (C(p1), C(p2)) are generated based on the same measurement signals received independently by said first microcontroller (13) and said second microcontroller (14).

11. Safety device (10) according to any one of claims 7 to 10, **characterized in that** said third microcontroller (19) is configured to transmit said safety data, comprising said payload (p1, p2) and said control data (C(p1), C(p2)), to said master device (11) according to the IO-Link communication protocol via said transceiver (17).
